# FASCICULE DE BREVET EUROPEEN

(11) **EP 1 705 115 B1**
(45) Date de publication et mention de la délivrance du brevet: **08.08.2012**
(21) Numéro de dépôt: 06003674.6
(22) Date de dépôt: 23.02.2006
(51) Int. Cl.: B64C 27/51, B64C 27/50, F16D 41/10, F16D 7/08, F16D 48/02

(54) **Limiteur de couple à deux entrées mécaniques**
Drehmomentbegrenzer mit zwei mechanischen Eingängen
Torque limiter having two mechanical inputs

(30) Priorité: 21.03.2005 FR 0502762
(43) Date de publication de la demande: 27.09.2006
(73) Titulaire: EUROCOPTER, 13725 Marignane Cédex (FR); Artus, 49241 Avrille (FR)
(72) Inventeur: Louis, Charles, 13090 Aix en Provence (FR); Quesne, Patrick, 49000 Ecouflant (FR)
(74) Mandataire: GPI & Associés

(56) Documents cités:
- EP-A- 0 997 661
- EP-A- 1 072 507
- US-A- 4 613 023
- US-A- 4 901 831
- US-A- 4 909 363

## Description

La présente invention concerne un dispositif ayant deux entrées mécaniques pour limiter le couple exercé sur une chaîne de transmission de puissance en autorisant un fonctionnement manuel et automatique.

Ce dispositif est particulièrement bien adapté à un système de repliage automatique d'une pale d'un rotor principal de sustentation et de propulsion d'un hélicoptère, ce type de système étant notamment utile lorsque l'hélicoptère est parqué dans un navire.

En effet, pour replier automatiquement une pale, c'est-à-dire la faire passer d'une configuration de vol à une configuration de parking, un moteur active une chaîne de transmission de puissance pour piloter un moyen de repliage de la pale. Or, si un élément extérieur, un obstacle lié à l'environnement tel qu'une cloison ou une rafale de vent par exemple vient bloquer la pale au cours du repliage, le couple exercé sur la chaîne de transmission va croître ce qui risque de causer des dommages importants au système. Il est donc impératif de prévoir un dispositif limitant ce couple.

On connaît un limiteur de couple comportant un premier plateau qui entraîne un deuxième plateau par l'intermédiaire d'une pluralité de billes, ces dernières étant disposées dans des orifices ménagés dans les premier et deuxième plateaux. Ce limiteur de couple est agencé entre un actionneur et une chaîne de transmission.

Si le couple exercé sur la chaîne de transmission est trop important, les billes sortent des orifices ce qui empêche l'entraînement du deuxième plateau par le premier plateau. Dès que le couple revient à un niveau acceptable, les billes retournent dans leur logement, le premier plateau mettant de nouveau en mouvement le deuxième plateau.

Ce limiteur de couple répond aux besoins. Cependant, une autre difficulté majeure doit être considérée. En effet, en cas de panne du moteur du dispositif automatique de repliage, il devient impossible de replier la pale ce qui peut poser des problèmes majeurs d'encombrement du navire dans lequel est parqué l'hélicoptère. Le limiteur de couple ne pouvant pas faire office d'actionneur, il est donc nécessaire de prévoir un moyen annexe d'actionnement de la chaîne de transmission. Le dispositif de repliage devient alors particulièrement complexe compte tenu de l'éventuel blocage du moteur, qui peut gêner la manoeuvre, et des contraintes géométriques imposées par le rotor principal.

Le document US 4 613 023 a pour objet un dispositif utilisé pour contrôler le mouvement d'un volet de bord de fuite d'une aile d'avion.

Ce volet est mis en mouvement par un arbre dudit dispositif. Cet arbre met en rotation un bras de sortie via une paire de plateaux, un axe puis un réducteur de couple planétaire.

Dans ces conditions, la présente invention a pour objet un limiteur de couple faisant si nécessaire office de moyen d'actionnement et autorisant par conséquent un fonctionnement manuel et un fonctionnement automatique.

Selon l'invention, un limiteur de couple d'une chaîne de transmission de puissance, autorisant un fonctionnement manuel et un fonctionnement automatique, est muni d'un premier plateau qui entraîne en rotation via une pluralité de billes un deuxième plateau, coaxial au premier plateau, chaque bille étant apte à sortir d'un logement pour ne plus mettre en mouvement le deuxième plateau lorsque le couple exercé sur la chaîne de transmission de puissance est supérieur à un seuil prédéterminé. Chaque logement comporte un premier et un deuxième orifices en regard l'un de l'autre et réalisés respectivement dans les premier et deuxième plateaux. Le limiteur de couple est remarquable en ce qu'il comporte une première et une deuxième entrées distinctes pour mettre en rotation ledit premier plateau autour de son axe.

Nous verrons par la suite que le deuxième plateau entraîne ,via des dentures et un arbre central, une chaîne de transmission de puissance de préférence utilisée pour activer un système mécanique, tel qu'un système de repliage de pale d'un rotor principal d'avancement et de sustentation de giravion.

Lorsque le couple exercé sur la chaîne de transmission de puissance est inférieur à un seuil prédéfini, les billes demeurent dans leur logement et permettent au premier plateau de mettre en mouvement le deuxième plateau.

A contrario, si la pale est bloquée par un obstacle, le couple exercé sur la chaîne de transmission de puissance augmente. Lorsque le seuil prédéfini est dépassé, les billes sortent de leur logement et poussent le deuxième plateau qui se déplace axialement, du côté opposé au premier plateau. Par suite, le premier plateau ne peut plus entraîner en rotation le deuxième plateau ce qui a pour effet de limiter le couple.

En outre, le limiteur de couple comporte une roue libre réversible comprenant en zone interne ledit premier plateau et en zone externe une roue dentée, la roue dentée constituant la première entrée.

De plus, le premier plateau possédant au moins deux branches radiales réparties de façon équidistantes sur sa périphérie, la roue libre réversible comporte un nombre de paires de galets autobloquants identique au nombre de branches, les galets autobloquants d'une paire étant disposés de part et d'autre d'une branche. Chaque branche est alors munie d'un ressort principal qui pousse les galets autobloquants d'une paire dans des directions opposées.

Dans ces conditions, deux branches adjacentes sont reliées par une face du premier plateau brisée en son centre, la distance radiale séparant le noyau du premier plateau de la roue dentée étant alors minimale au niveau de la brisure de cette face et inférieure au diamètre des galets autobloquants. En étant poussés par les ressorts principaux, les galets glissent sur les pans inclinés de chacune des faces brisées et, compte tenu de la distance radiale décrite précédemment, finissent par être bloqués entre le premier plateau et la roue dentée.

En fonctionnement automatique, la première entrée, à savoir la roue dentée, est pilotée par un moteur indépendant du limiteur de couple. Par l'intermédiaire des galets autobloquants, la roue dentée entraîne à son tour le premier plateau qui active une chaîne de transmission via les billes, le deuxième plateau et l'arbre central.

Le fonctionnement étant automatisé, si le couple exercé sur la chaîne de transmission est supérieur à un seuil prédéterminé, il est impératif que le limiteur de couple selon l'invention puisse arrêter le moteur.

Par conséquent, le limiteur de couple est muni d'un moyen d'arrêt pourvu d'un levier, solidaire en translation du deuxième plateau, pour arrêter le moteur lorsque le couple est supérieur au seuil prédéterminé.

Dans cette configuration, sous l'action des billes, le deuxième plateau effectue un mouvement de translation dans la direction opposée au premier plateau et soulève le levier qui active le moyen d'arrêt, un switch par exemple. Ce dernier ordonne alors au moteur de s'arrêter, en coupant son alimentation électrique par exemple, pour supprimer le couple nuisible exercé.

Le limiteur de couple a donc restreint le couple exercé sur la chaîne de transmission de puissance à une valeur ne dépassant pas le seuil prédéfini.

En cas de dysfonctionnement du moteur, le limiteur de couple autorise avantageusement un mode de fonctionnement manuel à l'aide de sa deuxième entrée. Dans ce mode de fonctionnement l'invention fait non seulement office de limiteur de couple mais aussi d'actionneur mécanique.

De préférence, la deuxième entrée comporte une cloche dont la première extrémité est alésée en forme de six pans creux, la deuxième extrémité comportant autant de doigts qu'il y a de paire de galets autobloquants. Chaque doigt est agencé entre le premier plateau et la roue dentée de manière à être positionné entre deux galets adjacents de deux paires de galets distinctes.

En fonctionnement manuel, un opérateur fait tourner la cloche à l'aide d'une clef à six pans insérée dans la première extrémité de la cloche. Les doigts débloquent alors les galets autobloquants et mettent en mouvement le premier plateau sans entraîner la roue dentée. Cela permet d'activer la chaîne de transmission manuellement même si la roue dentée est bloquée dans une position, par un moteur défaillant par exemple.

En outre, la fonction limiteur de couple est conservée. En effet, si le couple dépasse le seuil prédéterminé, les billes sortent de leur logement ce qui occasionne un cliquetis caractéristique audible par l'opérateur.

Enfin, la présence de paires de galets autobloquants, au lieu d'un unique galet, est très intéressante dans la mesure où elle autorise un fonctionnement du limiteur de couple, et plus particulièrement des première et deuxième entrées, dans les sens de rotation senestrorsum et dextrorsum.

L'invention et ses avantages apparaîtront avec plus de détails dans le cadre de la description suivante, qui illustre un exemple de réalisation préféré, donné sans aucun caractère limitatif, en référence aux figures annexées qui représentent :
- la figure 1, une coupe du limiteur de couple selon l'invention, et
- la figure 2, une vue de dessus de la roue libre réversible.

Les éléments présents dans plusieurs figures distinctes sont affectés d'une seule et même référence.

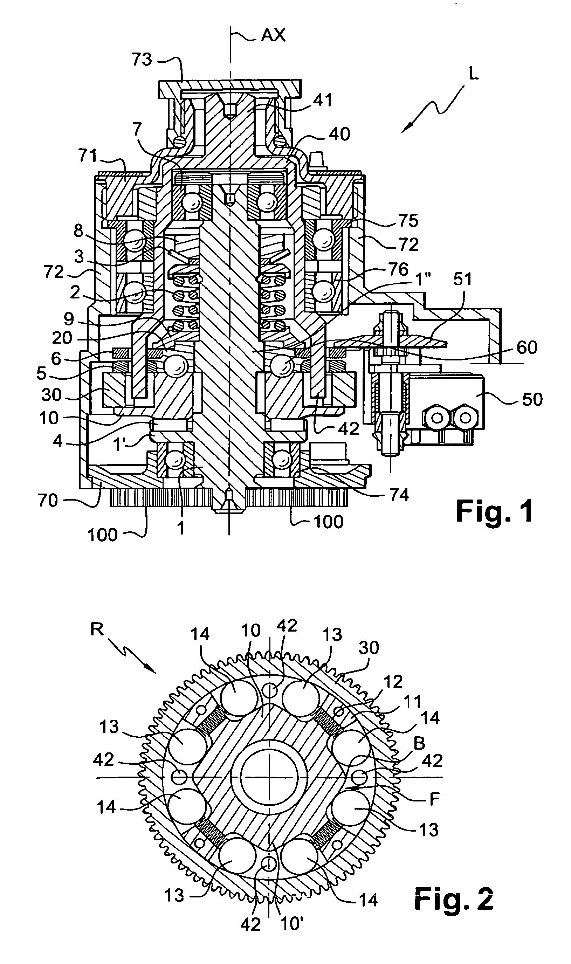

La figure 1 présente une coupe d'un limiteur de couple L selon l'invention.

Ce dernier comporte une cloche 40 dans laquelle est inséré un arbre central 1. De plus, un roulement à billes 7, un écrou 8, une rondelle freinage 3 de l'écrou 8, un ressort principal 2 et une cale 9 sont successivement agencés entre la cloche 40 et la partie supérieure de l'arbre central 1 et sont bloqués axialement entre la première extrémité 41 de la cloche 40 et des dents 1" de l'arbre central 1.

De part ces dents 1", l'arbre central 1 peut être entraîné en rotation autour de son axe AX par un deuxième plateau 20. De son côté, ce deuxième plateau 20 est mis en mouvement par un premier plateau 10 via une pluralité de billes 60, chaque bille 60 étant logée dans un logement constitué d'un premier et d'un deuxième orifice en regard l'un de l'autre ménagés respectivement dans les premier 10 et deuxième 20 plateaux. Les premier 10 et deuxième 20 plateaux possèdent le même axe de rotation AX et sont agencés radialement entre la partie intermédiaire de l'arbre central 1 et la deuxième extrémité de la cloche 40.

En outre, une cale 5 est partiellement disposée entre les premier 10 et deuxième 20 plateaux. Cette cale 5 est fixée au premier plateau 10 à l'aide de moyens usuels, des rivets par exemple. De plus, la deuxième extrémité de la cloche 40 comportant quatre doigts 42 dont les pointes représentent les quatre coins d'un carré fictif, la cale 5 est munie de quatre orifices, des trous oblongs par exemple dans lesquels sont insérés les doigts 42.

De même, un poussoir 6 comporte quatre orifices traversés par les doigts 42. Ce poussoir 6 est solidaire en translation le long de l'axe AX du deuxième plateau 20 dans la direction opposée au premier plateau 10. On verra par la suite que le poussoir 6 a pour but de pousser un levier 51 de manière à activer un switch 50.

Avantageusement, le limiteur de couple L comporte une roue libre réversible comprenant en zone interne le premier plateau 10 et en zone externe une roue dentée 30 qui est agencée entre les périphéries du premier plateau 10 et de la cale 5.

Par ailleurs, la partie basse de l'arbre central 1 comporte un épaulement 1' qui est séparé du premier plateau 10 par une cale de réglage 4. Contrairement au deuxième plateau 20, le premier plateau 10 ne peut en aucun cas être déplacé en translation le long de l'axe AX.

Enfin, le limiteur de couple L comporte un carter qui entoure l'ensemble des pièces précitées. Il est pourvu notamment d'un fond 70, d'un couvercle 71 et de parois latérales 72 présentant une ouverture par laquelle saille au moins une partie de la roue dentée 30. De plus, un bouchon 73 fixé de façon amovible sur le couvercle 71 recouvre la première extrémité 41 de la cloche 40.

Par ailleurs, une pluralité de roulements à billes 74, 75, 76 permettent de ne pas entraver le mouvement des éléments tournants du dispositif, l'arbre central 1 et la cloche 40 par exemple.

La figure 2 présente une vue de dessus de la roue libre réversible R du limiteur de couple L.

Le premier plateau 10 comporte quatre branches 11 réparties de façon équidistantes sur sa périphérie, chaque branche 11 étant pourvue d'un ressort secondaire 12. Deux branches adjacentes sont de plus reliées par une face F du premier plateau 10, cette face F étant brisée en son centre de telle manière que la distance radiale séparant le noyau 10' du premier plateau 10 de la roue dentée 30 est minimale au niveau de la brisure B.

En outre, la roue libre R est munie de quatre paires de galets autobloquants. Les galets 13,14 d'une paire sont agencés de part et d'autre d'une branche 11 et sont poussés dans des directions opposées par le ressort secondaire 12 de la branche 11. En étant poussés de la sorte, les galets autobloquants sont coincés entre le premier plateau 10 et la roue dentée 30.

Enfin, la figure 2 fait apparaître les quatre doigts 42 de la deuxième extrémité de la cloche 40 qui sont disposés entre le premier plateau 10 et la roue dentée 30. Plus précisément, chaque doigt 42 est agencé entre deux galets adjacents 13,14 de deux paires de galets distinctes et adjacentes.

En référence aux figures 1 et 2, le limiteur de couple L pilote une chaîne de transmission de puissance principale, par exemple pour replier une pale du rotor principal d'avancement et de sustentation d'un giravion. Ainsi, l'arbre central 1 représente une sortie mécanique du limiteur de couple L et entraîne en rotation autour de son axe AX un train épicycloïdal 100 de la chaîne de transmission, ou tout autre moyen analogue.

Pour que cet arbre central 1 soit lui-même mis en mouvement, le limiteur de couple L comporte une première et une deuxième entrées mécaniques pouvant respectivement permettre un fonctionnement automatique et manuel. La première entrée est représentée par la roue dentée 30, alors la première extrémité 41, en forme de six pans creux par exemple, de la cloche 40 constitue la deuxième entrée.

Quelque soit l'entrée utilisée, le premier plateau 10 met en rotation le deuxième plateau 20 par l'intermédiaire d'une pluralité de billes 60. Ce deuxième plateau 20 entraîne alors l'unique sortie mécanique du limiteur de couple L, à savoir l'arbre central 1, à l'aide des dents 1" disposées sur la périphérie de cet arbre central 1.

En fonctionnement automatique, un moteur non représenté sur les figures est en contact, directement ou via une chaîne de transmission de puissance secondaire, avec la portion de la roue dentée 30 qui est en saillie des parois latérales 72 du carter. Il induit alors un mouvement rotatif à cette roue dentée 30.

Les galets autobloquants étant bloqués entre la roue dentée 30 et le premier plateau 10, quel que soit le sens de rotation de la roue dentée 30, celle-ci répercute son mouvement rotatif au premier plateau 10. Par suite, ce premier plateau 10 entraîne le train épicycloïdal de la chaîne de transmission principale, successivement via les billes 60, le deuxième plateau 20 puis l'arbre central 1.

Si le couple exercé sur la chaîne de transmission principale et/ou secondaire dépasse un seuil prédéterminé, correspondant au réglage de la raideur du ressort principal 2 réalisé notamment à l'aide de l'écrou 8, les billes 60 sortent de leur logement. Le premier plateau ne pouvant se mouvoir le long de l'axe AX, sous l'action des billes 60 le deuxième plateau 20 entame alors un mouvement de translation le long de cet axe AX, dans la direction opposée au premier plateau 10. Par suite, le poussoir 6 se déplace aussi le long de l'axe AX et vient pousser le levier 51 qui active le switch 50.

Ce switch 50 ordonne alors au moteur de s'arrêter, en coupant son alimentation électrique par exemple. Le couple exercé sur la chaîne de transmission est alors supprimé.

Si l'augmentation de couple de la chaîne de transmission principale et/ou secondaire est provoquée par un obstacle lié à l'environnement, il suffit de supprimer cet obstacle et de relancer le moteur pour poursuivre la manoeuvre.

Par contre, si cette augmentation de couple est liée à un dysfonctionnement du moteur ou si le moteur tombe en panne, il est impératif de pouvoir disposer d'un autre moyen d'actionnement.

Le limiteur de couple L selon l'invention autorise alors un fonctionnement manuel ne nécessitant pas l'utilisation d'un moyen annexe d'actionnement.

Ainsi, un opérateur met en rotation la cloche 40 par l'intermédiaire de sa première extrémité 41 en forme de six pans creux, à l'aide d'un outil usuel. Quel que soit le sens de rotation, senestrorsum ou dextrorsum, chaque doigt 42 pousse un galet autobloquant d'une paire afin que ce galet ne soit plus bloqué entre la roue dentée 30 et le premier plateau 10. Le ressort secondaire 12 associé se rétracte et chaque doigt 42 finit par entraîner une branche du premier plateau 10. De ce fait, sous l'action de l'opérateur, la cloche 40 met en rotation le premier plateau 10 et non pas la roue dentée 30.

Si le couple exercé est trop important, les billes 60 sortent de leur logement. Ce déplacement des billes a pour conséquence un cliquetis parfaitement audible par l'opérateur qui cessera alors toute action.

De plus, selon le mode de réalisation décrit par les figures, le premier plateau 10 comporte un nombre de branches 11 égal à quatre. Par suite, le limiteur de couple L est pourvu de quatre :
- paires de galets 13, 14,
- doigts 42,
- orifices dans le poussoir 6,
- orifices dans la cale 5.

Néanmoins, ce nombre est bien évidemment ajustable suivant le besoin, tout en restant supérieur ou égal à 2.

## Revendications

1. Limiteur de couple (L) d'une chaîne de transmission de puissance muni d'un premier plateau (10) qui entraîne en rotation via une pluralité de billes (60) un deuxième plateau (20) coaxial audit premier plateau (10), chaque bille (60) étant apte à sortir d'un logement pour ne plus mettre en mouvement ledit deuxième plateau (20) lorsque le couple exercé sur ladite chaîne de transmission de puissance est supérieur à un seuil prédéterminé **caractérisé en ce que** ledit logement comportant un premier et un deuxième orifices en regard l'un de l'autre et réalisés respectivement dans les premier et deuxième plateaux, et **en ce**
**qu'**il comporte une première et une deuxième entrées distinctes pour mettre en rotation ledit premier plateau (10).

2. Limiteur de couple selon la revendication 1,
**caractérisé en ce qu'**il comporte une roue libre réversible (R) comprenant en zone interne ledit premier plateau (10) et en zone externe une roue dentée (30), ladite roue dentée (30) constituant ladite première entrée.

3. Limiteur de couple selon la revendication 2,
**caractérisé en ce que**, ledit premier plateau (10) ayant au moins deux branches radiales (11) réparties de façon équidistantes sur sa périphérie, ladite roue libre réversible (R) comporte un nombre de paires de galets autobloquants identique au nombre de branches (11), les galets autobloquants (13,14) d'une paire étant disposés de part et d'autre d'une branche (11).

4. Limiteur de couple selon la revendication 3,
**caractérisé en ce que** deux branches adjacentes sont reliées par une face (F) dudit premier plateau (10) brisée en son centre, la distance radiale séparant le noyau (10') dudit premier plateau (10) de ladite roue dentée (30) étant alors minimale au niveau de la brisure (B) de ladite face (F).

5. Limiteur de couple selon l'une quelconque des revendications 3 à 4,
**caractérisé en ce que** chaque branche (11) est munie d'un ressort secondaire (12) qui pousse les galets autobloquants (13,14) d'une paire dans des directions opposées.

6. Limiteur de couple selon l'une quelconque des revendications 3 à 5,
**caractérisé en ce que** ladite deuxième entrée comporte une cloche (40) dont la première extrémité (41) est alésée en forme de six pans creux, la deuxième extrémité comportant autant de doigts (42) qu'il y a de paires de galets autobloquants.

7. Limiteur de couple selon la revendication 6,
**caractérisé en ce que** chaque doigt (42) de ladite cloche (40) est agencé entre ledit premier plateau (10) et ladite roue dentée (30) de manière à être positionné entre deux galets adjacents de deux paires de galets distinctes.

8. Limiteur de couple selon l'une quelconque des revendications 6 à 7,
**caractérisé en ce que**, en fonctionnement manuel, chaque doigt (42) débloque lesdits galets autobloquants (13,14) pour entraîner ledit premier plateau (10) sans entraîner ladite roue dentée (30).

9. Limiteur de couple selon l'une quelconque des revendications 3 à 8,
**caractérisé en ce que**, en fonctionnement automatique, ledit premier plateau (10) est entraîné par ladite roue dentée (30) via lesdits galets (13,14), ladite roue dentée (30) étant pilotée par un moteur indépendant dudit limiteur de couple (L).

10. Limiteur de couple selon la revendication 9,
**caractérisé en ce qu'**il comporte un moyen d'arrêt pourvu d'un levier (51) pour arrêter ledit moteur lorsque ledit couple est supérieur au dit seuil .

11. Limiteur de couple selon la revendication 10,
**caractérisé en ce que**, ledit deuxième plateau (20) effectuant un mouvement de translation dans la direction opposée au dit premier plateau (10) sous l'effet desdites billes (60) lorsque ledit seuil est dépassé, ledit levier (51) est soulevé par ledit deuxième plateau (20) pour activer ledit moyen d'arrêt.

12. Limiteur de couple selon l'une quelconque des revendications 10 à 11,
**caractérisé en ce que** ledit moyen d'arrêt est un switch (50).

13. Limiteur de couple selon l'une quelconque des revendications précédentes,
**caractérisé en ce qu'**il comporte une unique sortie (1).

## Claims

1. Torque limiter (L) of a power transmission system provided with a first plate (10) that drives in rotation a second plate (20) via a plurality of balls (60), said second plate (20) being coaxial with said first plate (10), each ball (60) being able to escape from a housing so as to cease transmitting movement to said second plate (20) when the torque exerted on said power transmission system exceeds a predetermined threshold, **characterised in that** said housing comprising [sic] a first orifice and
a second orifice facing each other and made respectively in the first plate and in the second plate, and **in that**
it comprises a first and second distinct input for setting said first plate (10) in rotation.

2. Torque limiter according to Claim 1,
**characterised in that** it comprises a reversible freewheel (R) comprising said first plate (10) in an inner zone and
a toothed wheel (30) in an outer zone, said toothed wheel (30) constituting said first input.

3. Torque limiter according to Claim 2,
**characterised in that** said first plate (10) has at least two radial branches (11) equidistantly distributed around its periphery, said reversible freewheel (R) having a number of pairs of self-locking rollers (13, 14) that is identical to the number of branches (11), said self-locking rollers (13, 14) of a pair being disposed on either side of a branch (11).

4. Torque limiter according to Claim 3,
**characterised in that** two adjacent branches are connected by a face (F), with a bend in its centre, of said first plate (10), the radial distance between the core (10') of said first plate (10) and said toothed wheel (30) then being at a minimum at the bend (B) of said face (F).

5. Torque limiter according to any one of Claims 3 to 4,
**characterised in that** each branch (11) is provided with a secondary spring (12) that urges the self-locking rollers (13, 14) of a pair in opposite directions.

6. Torque limiter according to any one of Claims 3 to 5,
**characterised in that** said second input comprises a bell (40) with a first end (41) that has a hexagon socket, and a second end that has as many fingers (42) as there are pairs of self-locking rollers.

7. Torque limiter according to Claim 6,
**characterised in that** each finger (42) of said bell (40) is disposed between said first plate (10) and said toothed wheel (30) in such a manner as to be positioned between two adjacent rollers of two distinct pairs of rollers.

8. Torque limiter according to any one of Claims 6 to 7,
**characterised in that**, in manual operation, each finger (42) unlocks said self-locking rollers (13, 14) to drive said first plate (10) without driving said toothed wheel (30).

9. Torque limiter according to any one of Claims 3 to 8,
**characterised in that**, in automatic operation, said first plate (10) is driven by said toothed wheel (30) via said rollers (13, 14), said toothed wheel (30) being controlled by a motor that is independent of said torque limiter (L).

10. Torque limiter according to Claim 9,
**characterised in that** it comprises stop means provided with a lever (51) for stopping said motor when said torque exceeds said threshold.

11. Torque limiter according to Claim 10,
**characterised in that** said second plate (20) performs a movement in translation away from said first plate (10) under the effect of said balls (60) when said threshold is exceeded, said lever (51) being lifted by said second plate (20) so as to activate said stop means.

12. Torque limiter according to any one of Claims 10 to 11,
**characterised in that** said stop means is a switch (50).

13. Torque limiter according to any one of the preceding claims,
**characterised in that** it comprises a single output (1).

## Patentansprüche

1. Drehmomentbegrenzer (L) einer Kraftübertragungskette mit einer ersten Scheibe (10), die über eine Mehrzahl von Kugeln (60) eine zweite Scheibe (20), die koaxial zur ersten Scheibe (10) ausgerichtet ist, zu einer Drehbewegung antreibt, wobei jede Kugel (60) aus einem Lager austreten kann, um die zweite Scheibe (20) nicht mehr zu bewegen, wenn das auf die Kraftübertragungskette ausgeübte Drehmoment größer ist als ein vorbestimmter Schwellenwert,
**dadurch gekennzeichnet, dass** das Lager erste und zweite Öffnungen aufweist, die sich gegenüberstehen und jeweils in der ersten bzw. der zweiten Scheibe ausgearbeitet sind, und **gekennzeichnet durch** einen ersten und einen zweiten voneinander getrennten Eingang zum Drehen der ersten Scheibe (10).

2. Drehmomentbegrenzer nach Anspruch 1,
**gekennzeichnet durch** einen umkehrbaren Freilauf (R), der in seinem inneren Bereich die erste Scheibe (10) und in seinem äußeren Bereich ein Zahnrad (30) aufweist, wobei das Zahnrad (30) den ersten Eingang darstellt.

3. Drehmomentbegrenzer nach Anspruch 2,
**dadurch gekennzeichnet, dass** die erste Scheibe (10) mindestens zwei radiale Schenkel (11) aufweist, die mit gleichem Abstand zueinander auf dem Umfang der Scheibe verteilt angeordnet sind, der umkehrbare Freilauf (R) eine Anzahl von Paaren von selbstblockierenden Rollen aufweist, die gleich der Anzahl der Schenkel (11) ist, wobei die selbstblockierenden Rollen (13, 14) eines Paares auf der einen und der anderen Seite eines Schenkels (11) angeordnet sind.

4. Drehmomentbegrenzer nach Anspruch 3,
**dadurch gekennzeichnet, dass** zwei benachbarte Schenkel durch eine Fläche (F) der ersten Scheibe (10) verbunden sind, die in ihrer Mitte geknickt ist, wobei der radiale Abstand, der den Kern (10') der ersten Platte (10) von dem Zahnrad (30) trennt, auf der Höhe des Knicks (B) der Seite (F) minimal ist.

5. Drehmomentbegrenzer nach einem der Ansprüche 3 oder 4,
**dadurch gekennzeichnet**, dassjeder Schenkel (11) mit einer sekundären Feder (12) versehen ist, die die selbstblockierenden Rollen (13, 14) eines Paares in entgegengesetzte Richtungen drückt.

6. Drehmomentbegrenzer nach einem der Ansprüche 3 bis 5,
**dadurch gekennzeichnet, dass** der zweite Eingang eine Glocke (40) aufweist, deren erstes Ende (41) in Form von sechs hohlen Flächen ausgebohrt ist, wobei das zweite Ende genauso viele Finger (42) aufweist wie es Paare von selbstblockierenden Rollen gibt.

7. Drehmomentbegrenzer nach Anspruch 6.
**dadurch gekennzeichnet, dass** jeder Finger (42) der Glocke (40) zwischen der ersten Scheibe (10) und dem Zahnrad (30) derart angeordnet ist, dass er zwischen zwei benachbarten Rollen von zwei unterschiedlichen Rollenpaaren liegt.

8. Drehmomentbegrenzer nach einem der Ansprüche 6 oder 7,
**dadurch gekennzeichnet, dass** im manuellen Betrieb jeder Finger (42) die selbstblockierenden Rollen (13, 14) löst, um die erste Scheibe (10) anzutreiben, ohne das Zahnrad (30) anzutreiben.

9. Drehmomentbegrenzer nach einem der Ansprüche 3 bis 8,
**dadurch gekennzeichnet, dass** im automatischen Betrieb die erste Scheibe (10) durch das Zahnrad (30) über die Rollen (13, 14) angetrieben wird, wobei das Zahnrad (30) von einem von dem Drehmomentbegrenzer (L) unabhängigen Motor angetrieben wird.

10. Drehmomentbegrenzer nach Anspruch 9,
**gekennzeichnet durch** ein Anhaltemittel mit einem Hebel (51) zum Anhalten des Motors, wenn das Drehmoment größer als der besagte Schwellenwert ist.

11. Drehmomentbegrenzer nach Anspruch 10,
**dadurch gekennzeichnet, dass**, wenn die zweite Scheibe (20) eine Translationsbewegung in Gegenrichtung zu der ersten Scheibe (10) durch Einwirkung der Kugeln (60) ausführt, wenn der besagte Schwellenwert überschritten ist, der Hebel (51) durch die zweite Scheibe (20) angehoben wird, um das Anhaltemittel zu aktivieren.

12. Drehmomentbegrenzer nach einem der Ansprüche 10 oder 11,
**dadurch gekennzeichnet, dass** das Anhaltemittel ein Schalter (50) ist.

13. Drehmomentbegrenzer nach einem der vorstehenden Ansprüche,
**dadurch gekennzeichnet, dass** er einen einzigen Ausgang (1) aufweist.
